# EUROPÄISCHE PATENTSCHRIFT

(11) **EP 1 501 764 B1**
(45) Veröffentlichungstag und Bekanntmachung des Hinweises auf die Patenterteilung: **03.01.2007**
(21) Anmeldenummer: 03732329.2
(22) Anmeldetag: 08.05.2003
(51) Int. Cl.: C02F 1/52, C02F 1/44, B01D 21/08, B01D 61/18, B01D 63/08

(54) **VERFAHREN ZUR WASSERAUFBEREITUNG SOWIE WASSERAUFBEREITUNGSANLAGE**
WATER TREATMENT METHOD AND WATER TREATMENT SYSTEM
PROCEDE ET INSTALLATION DE TRAITEMENT DES EAUX

(30) Priorität: 08.05.2002 DE 10220743
(43) Veröffentlichungstag der Anmeldung: 02.02.2005
(73) Patentinhaber: Passavant-Roediger Umwelttechnik GmbH, 65326 Aarbergen (DE)
(72) Erfinder: GERLACH, Markus, 63486 Bruchköbel (DE)
(74) Vertreter: Stoffregen, Hans-Herbert
(86) Internationale Anmeldenummer: PCT/EP2003/004826
(87) Internationale Veröffentlichungsnummer: WO 2003/095371

(56) Entgegenhaltungen:
- EP-A- 0 700 713
- GB-A- 2 050 338
- PATENT ABSTRACTS OF JAPAN vol. 016, no. 556 (C-1007), 26. November 1992 (1992-11-26) -& JP 04 215887 A (KUBOTA CORP), 6. August 1992 (1992-08-06) -& DATABASE WPI Derwent Publications Ltd., London, GB; AN 1992-311600 XP002252619 & JP 04 215887 A
- PATENT ABSTRACTS OF JAPAN vol. 1997, no. 10, 31. Oktober 1997 (1997-10-31) -& JP 09 141065 A (KURITA WATER IND LTD), 3. Juni 1997 (1997-06-03) -& DATABASE WPI Derwent Publications Ltd., London, GB; AN 1997-345549 XP002252620 & JP 09 141065 A
- PATENT ABSTRACTS OF JAPAN vol. 1996, no. 07, 31. Juli 1996 (1996-07-31) -& JP 08 057267 A (KURITA WATER IND LTD), 5. März 1996 (1996-03-05) -& DATABASE WPI Derwent Publications Ltd., London, GB; AN 1996-182796 XP002252621 & JP 08 057267 A
- PATENT ABSTRACTS OF JAPAN vol. 1999, no. 09, 30. Juli 1999 (1999-07-30) -& JP 11 104657 A (KIRIN ENGINEERING KK;MITSUBISHI KAKOKI KAISHA LTD), 20. April 1999 (1999-04-20) -& DATABASE WPI Derwent Publications Ltd., London, GB; AN 1999-306529 XP002252622 & JP 11 104657 A
- PATENT ABSTRACTS OF JAPAN vol. 1996, no. 02, 29. Februar 1996 (1996-02-29) -& JP 07 275610 A (MAEZAWA IND INC), 24. Oktober 1995 (1995-10-24) -& DATABASE WPI Derwent Publications Ltd., London, GB; AN 1995-399608 XP002252623 & JP 07 275610 A
- PATENT ABSTRACTS OF JAPAN vol. 1998, no. 01, 30. Januar 1998 (1998-01-30) -& JP 09 248430 A (TAKIZAWA SATOSHI;MITSUBISHI RAYON CO LTD), 22. September 1997 (1997-09-22) -& DATABASE WPI Derwent Publications Ltd., London, GB; AN 1997-520947 XP002252624 & JP 09 248430 A
- PATENT ABSTRACTS OF JAPAN vol. 2000, no. 13, 5. Februar 2001 (2001-02-05) -& JP 2000 300965 A (HITACHI PLANT ENG & CONSTR CO LTD), 31. Oktober 2000 (2000-10-31) -& DATABASE WPI Derwent Publications Ltd., London, GB; AN 2001-084490 XP002252625 & JP 2000 300965 A
- PATENT ABSTRACTS OF JAPAN vol. 1995, no. 10, 30. November 1995 (1995-11-30) -& JP 07 185272 A (KURITA WATER IND LTD), 25. Juli 1995 (1995-07-25) -& DATABASE WPI Derwent Publications Ltd., London, GB; AN 1995-288179 XP002252626 & JP 07 185272 A

## Beschreibung

Die Erfindung bezieht sich auf ein Verfahren zur Wasseraufbereitung, insbesondere von Grund- und Oberflächenwasser, durch in einer oder mehreren Flockungsstufen durchgeführten Flockung oder Kontaktflockung sowie in einer nachgeschalteten in einem Sedimentationsbecken erfolgten Sedimentationsstufe durchgeführten Flockenseparation und Flockensehlammeindickung.

Um Wasser durch Flockung und Sedimentation aufzubereiten, kann eine Direktflockung mit einfachem Klärbecken erfolgen, wobei ein großes Bauvolumen benötigt wird, um möglichst lange Kontaktzeiten für die Flockenbildung und möglichst niedrige Oberflächenbelastungen für die Sedimentation zu erreichen. Um die Kinetik des Flockenwachstums zu verbessern, werden auch Klärer mit integrierter Kontaktflockung im Schlammschwebebett eingesetzt. Dabei wird einströmendes, geflocktes Wasser durch Zonen des Schlammschwebebettes geleitet, das sich bei der Sedimentation ausbildet.

Eine erhebliche Verbesserung der Flockenabscheidung kann durch den Einsatz sogenannter Lamellenklärer erreicht werden, in denen die effektive Absetzfläche für die Sedimentation durch das Anordnen paralleler Platten erheblich vergrößert wird. Dadurch kann das Bauvolumen des Klärers entsprechend verkleinert werden. Entsprechende Platten verlaufen dabei, grundsätzlich geneigt zur Horizontalen.

Ein Verfahren und eine Anlage der eingangs genannten Art ist dem Prospekt PASSAVANT ROEDIGER, Das Passavant-Turbo-LME-Verfahren, zu entnehmen. Das entsprechende Verfahren basiert auf der Kombination des sogenannten Turboflokkungsverfahrens und des Lamellenabscheiders. Dabei wird eine Mehrkammerflockung zur Erzeugung einer extrem sedimentationsfähigen Flockung eingesetzt, die in einem anschließenden Lamellenseparator vom Wasser getrennt und direkt in einem Eindicker auf optimale Schlammkonzentration eingedickt wird. Dabei wird durch dem Sedimentationsbecken vorgeschaltete hochturbulente Flockungsstufen, Kontaktschlammrückführung sowie individuell definierten Energieeintrag die Reaktionskinetik optimal genutzt. Die Lamellen selbst verlaufen dabei ebenfalls geneigt zur Horizontalen.

Auch wenn mit entsprechenden Anlagen eine hohe Partikelabscheiderate erzielt werden kann, muss das dem Sedimentationsbecken entnommene Wasser einer weiteren Filtration unterzogen werden, um Trinkwasserqualität zu erreichen.

Aus dem DE 298 01 619 U1 ist eine Abwasserreinigungsanlage bekannt, bei der Sedimentation, Flotation und Filtration in einem offenen Behälter durchgeführt werden. Die Filtration erfolgt dabei mittels Kerzenfilter.

Um Filterrückspülwasser aufzubereiten, ist nach der DE 196 16 763 A1 vorgesehen, die wässrige oder sedimentierte Phase des Filterrückspülwasser über Membranfilter zu führen, die außerhalb eines Klärbehälters oder im Schlammsammelbereich dieses angeordnet sind.

Der FR-A 2 775 911 ist eine Wasseraufbereitungsanlage zu entnehmen, bei der Abscheiderplatten unter einem Winkel zwischen 5° und 65 ° zur Vertikalen geneigt verlaufen. Die Abscheiderplatten selbst spannen Ebenen auf, die senkrecht zur Zuströmrichtung des zu reinigenden Fluides verlaufen.

Zum Reinigen von Wasser durchströmt nach der DE-C 100 01 737 Flüssigkeit ein zylinderartiges Gehäuse, das im Bereich seiner Achse eine axial angeordnete Filtrationsmembran aufweist.

Zur Reinigung von Abwasser werden nach dem DE-U-200 16 417 schwingbar ausgebildete Filtermembranen als Trenneinrichtungen vorgeschlagen. Die Filterelemente selbst haben zueinander einen gleichen Abstand.

Die JP 04 215887 A zeigt eine Anordnung zum Aufbereiten von Abwasser, die mehrere Behandlungsstufen umfasst, wobei in einer Kammer ein Membranmodul enthalten ist. Dabei kann das Membranmodul derart angeordnet sein, dass die Membranoberfläche entlang Fließrichtung des zu behandelnden Wassers verläuft.

Nach der JP 09141065 A ist ein Membranmodul in einer Abwasseranlage eingebaut. Das Membranmodul umfasst dabei Membranplatten mit einem Abstand von 10 bis 15 mm. Durch die Anordnung der Membranplatten soll verhindert werden, dass sich auf diesen ein Filtratkuchen abscheidet.

Eine Sedimentationsstufe nach der JP 08057267 umfasst Membranplatten, die zur Vertikalen geneigt angeordnet sind.

Aus der EP 0 700 713 A1 ist eine Feststoffflüssigkeitseinrichtung mit Membranplatten bekannt, die von einem zu reinigenden Abwasser derart durchströmt wird, dass Feststoffablagerungen an den Platten unterbleiben.

Nach der JP 11104657 A wird eine Membraneinheit in einem Flockungsbecken angeordnet.

Vertikal geneigt angeordnete Membranfilterplatten sind nach der JP 07275610 in einer Abwasserbehandlungsstufe angeordnet. Das Penneat wird von den Filterplatten nach außen geführt.

Der vorliegenden Erfindung liegt das Problem zu Grunde, ein Verfahren zur Wasseraufbereitung sowie eine Wasseraufbereitungsanlage derart weiterzubilden, dass bei kompakter Bauweise unmittelbar gereinigtes Wasser gewinnbar ist, das als Trinkwasser oder dem Grunde nach als Trinkwasser verwendet werden kann. Dabei soll gleichzeitig die gute Absetzbarkeit der zu sedimentierenden Partikel optimal genutzt werden.

Erfindungsgemäß wird das Problem gelöst durch ein Verfahren zur Wasseraufbereitung, insbesondere von Grund- und Oberflächenwasser, durch in einer oder mehreren Flockungsstufen durchgeführten Flockung oder Kontaktflockung sowie in einer nachgeschalteten in einem Sedimentationsbecken erfolgenden Sedimentationsstufe durchgeführten Flockenseparation und Flockenschlammeindickung, wobei das Wasser in der Sedimentationsstufe entlang von Plattenelementen strömt, wobei als Plattenelemente Membranfilterplatten verwendet werden und den Permeatseiten der Membranfilterplatten Wasser entnommen wird, wobei die Membranfilterplatten parallel zueinander vertikal verlaufend und parallel zur Strömungsrichtung des von vorgeordneter Flockungsstufe in das Sedimentationsbecken strömenden Wassers angeordnet werden, wobei die Membranfilterplatten derart in Bezug auf Plattenabstand zu voneinander abweichende Behandlungsstufen bildenden Einheiten zusammengesetzt sind, dass eine Sedimentation bei gleichzeitiger Cross-Flow-Filtration und/oder eine Cross-Flow-Filtration und/oder eine Dead-End-Filtration oder eine Kombination dieser erfolgt, und/oder die zu dem Sedimentationsbecken führende Wasserzuströmöffnung höhenverstellbar ausgebildet ist, um gezielt die Membranfilterplatten von dem Wasser anströmen zu können, dass eine reine Sedimentation/Dead-End-Filtration, eine reine Cross-Flow-Filtration oder eine beliebige Kombination dieser realisiert werden kann.

Insbesondere werden die Membranfilterplatten in Zonen derart zueinander angeordnet, dass sich in einer wasserzuflussnahen ersten Zone eine Sedimentation, eine Cross-Flow-Filtration und eine Kreuzströmung zwischen zuströmenden Wasser und Massenstrom sedimentierender Flocken ergibt. Des Weiteren soll in einer mittleren zweiten Zone eine Cross-Flow-Filtration ermöglicht werden. Schließlich ist vorgesehen, dass sich in einer wasserzuflussentfemtliegenden dritten Zone eine Dead-End-Filtration einstellt.

Abweichend vom vorbekannten Stand der Technik werden für die Abscheidung der sedimentierenden Partikel Membranfilterplatten verwendet, die derart auf das in dem Sedimentationsbecken strömende und die Flocken enthaltende Wasser ausgerichtet werden, dass im gewünschten Umfang eine Cross-Flow-Filtration bzw. Dead-End-Filtration sowie Sedimentation erfolgt. Gleichzeitig kann dem Sedimentationsbecken unmittelbar gereinigtes Wasser entnommen werden, so dass weitere Wasserbehandlungsschritte wie Feinfiltration z.B. durch Sandfilter nicht erforderlich sind. Vielmehr genügt das den Permeatseiten der Membranfilterplatten entnommene Wasser hinsichtlich der Trübung und mikrobiologischen Beschaffenheit höchsten Reinheitsansprüchen an Trinkwasser.

Durch die Anordnung der Membranfilterplatten wird in den Absetzbecken eine hohe Raumausnutzung gewährleistet, bei gleichzeitig erzielbaren hydrodynamisch günstigen Effekten. Dadurch, dass unmittelbar der Sedimentationsstufe gereinigtes Wasser bzw. Klarwasser in Trinkqualität entnommen werden kann, können gleichzeitig Aufbereitungskosten reduziert werden.

Das erfindungsgemäße Verfahren verbindet eine Kontaktschlamm-Flockung mit einer integrierten Einheit zur Flockenseparation und Flockenschlammeindickung. Die Flokkenabtrennung erfolgt dabei sowohl durch Sedimentation als auch durch Membranfiltration, wobei als Membrantypen Mikro- oder Ultrafiltrationsmembranen zum Einsatz gelangen können.

Erfindungsgemäß erfolgt in einer die Membranfilterplatten enthaltenen Einheit Flockenseparation und Flockenschlammeindickung. Die Einheit umfasst daher auch einen Eindickerbereich. Daher wird die entsprechende Einheit nachstehend als Membranplatten-Abscheider-Eindicker (MPE-Abscheider) bezeichnet.

Die Membranfilterplatten werden unmittelbar in der Sedimentationsstufe, also nach der letzten Stufe eines insbesondere Mehrkammerflockungssystems angeordnet, um eine hydrodynamisch günstige Direktkopplung zwischen der Mehrkanunerkontaktflockung und dem MPE-Abscheider zu gewährleisten. Somit kann eine scherungsarme Strömungsführung und somit eine zerstörungsfreie Überführung der Flocken in der Sedimentation und Eindickung erreicht werden.

Die Membranfilterplatten, die vorzugsweise als Module zusammengesetzt sind, werden in mehreren Reihen vertikal und parallel zur Strömungsrichtung des zuströmenden Wassers angeordnet. Hieraus resultiert eine für den Mikro- oder Ultrafiltrationsvorgang günstige Kreuzströmung zwischen einerseits dem Permeat- und dem Konzentratsstrom (sogenannter Cross-Flow-Betrieb) und andererseits eine Kreuzströmung zwischen Zuströmung und Massestrom der sedimentierenden Flocken. Beide Effekte reduzieren die für die Membranfiltration unerwünschte Deckschichtenbildung auf den Membranoberflächen.

Die in der Mehrkammer-Kontaktflockung erfolgte Entstabilisierung von fein- und kolloidaldispersen Partikeln und deren Aggregation zu gut absetzbaren Makroflocken begünstigt die Membranfiltration, weil diese Partikel wesentlich zur Deckschichtenbildung beitragen. Somit beinhaltet die als integrierte Membranplattenabscheidung mit Eindickung zu bezeichnende Einheit im Anschluss an die Mehrkammerflockung einen weiteren Effekt, der die für die Membranfiltration unerwünschte Deckschichtenbildung auf den Membranoberflächen unterdrückt und den Deckschichtenaufbau derart begünstigt, dass eine vollständige Entfernung der Deckschichten durch einfaches Rückspülen gewährleistet wird.

Die sedimentierenden Flocken gelangen direkt, d. h. ohne strömungsbedingte Scherungen in den Eindickerbereich des Sedimentationsbeckens. Der eingedickte Schlamm wird geräumt und in einem zentral angeordneten Schlammtrichter gesammelt. Der Schlamm kann direkt aus dem Schlammtrichter zu einer Schlammentwässerung oder sonstigen weiteren Schlammbehandlung gefördert werden. Der für die Kontaktwirkung erforderliche hochreaktive Kontaktschlamm wird aus definierten Höhen des auch als Eindickraum zu bezeichnenden Sedimentationsbecken entnommen.

Im Bereich der Dead-End-Zone erfolgt optional ein Überstandswasserabzug aus dem Sedimentationsbecken, um einer möglicherweise langfristig stattfindenden Anreicherung nicht-sedimentierbarer Partikel entgegenzuwirken. Das Überstandswasser aus der oberen Beckenwand der Dead-End-Filtration wird in den Zulauf der Anlage, also in das erste Flockungsbecken, rückgeführt, um die angereicherten Partikel erneut einer Mehrkammerflockung zu unterziehen. Der Überstandswasserabzug kann zeitgetaktet oder prozesskontrolliert erfolgen. Der Überstandswasserstrom ist kleiner als 1 % vom Zulaufstrom.

Erfindungsgemäß erfolgt eine Kombination von Kontaktflockung, Sedimentation, Membranfiltration und Schlammeindickung in einer integralen Einheit, wodurch eine Vielzahl verfahrenstechnischer Vorteile erzielbar sind:
- Die Kombination Mehrkammerflockung und Schlammeindickung ermöglicht die direkte Kontaktschlammentnahme aus dem Eindickraum, der an definierter Stelle der Mehrkammerflockung zugeführt wird.
- Die Kombination Mehrkammerflockung und Sedimentation ermöglicht den direkten Flockenübergang von der Flockenreifung zur Flockensedimentation, wodurch hydrodynamisch bedingte Scherkräfte weitgehend vermieden werden können. Somit wird die Zerstörung von Flocken vermieden und eine enge Flokkengrößenverteilung erhalten, wodurch sich Vorteile sowohl in Bezug auf die Sedimentation als auch auf die Membranfiltration ergeben.
- Durch die Kombination Flockung/Membranfiltration wird die Membranfiltration stabilisiert, da kolloidal und feindisperse Partikel, die ungünstige Deckschichtenbildungen verursachen, in der Flockung zu größeren Partikeln agglomerieren. Die größeren Partikel sind im technischen Prozess sedimentierbar und bilden keine irreversiblen Deckschichten.
- Durch die Kombination Sedimentation und Membranfiltration wird die Membranfiltration von grob- und mitteldispersen Partikeln entlastet, so dass die Deckschichtenbildung auf der Membranoberfläche - sogenanntes Membran Fouling - reduziert werden kann.
- Durch die Kombination von Sedimentation und Eindickung in einer Einheit erfolgt ein direkter, d. h. hydrodynamisch ungestörter Übergang von der Flockensedimentation in die Flockenschlammeindickung. Damit bleiben die nach der Flockung günstigen AbsetzeigenschaRen der Flocken für die Eindickung erhalten. Gleichzeitig ergibt sich eine bessere Eindickung des Flockenschlammes.
- Durch die Kombination von Membranfiltration und Sedimentation/Eindickung werden die bei der Membranrückspülung abgelösten Deckschichten in situ entsorgt, da diese durch Sedimentation und Eindickung innerhalb desselben Prozesses über den Überschussschlamm dem System entzogen werden.
- Durch die Kombination aller genannten Verfahrensprozesse in einem integralen System wird eine sehr kompakte und somit raumsparende Bauweise ermöglicht.
- Ungeachtet dessen ist durch spezielle räumliche Anordnung sichergestellt, dass die wirksamen Mechanismen der hydrodynamischen Sequenz optimal angeordnet bzw. räumlich/zeitlich so getrennt werden können, dass die jeweiligen Prozesse steuerbar bleiben.
- Ein Überstandswasserabzug mit Rückführung zum Prozesszulauf unterbindet die Anreicherung nicht sedimentierbarer Partikel mit der MPE-Einheit.

Eine Wasseraufbereitungsanlage der eingangs genannten Art zeichnet sich dadurch aus, dass die Plattenelemente Membranfilterplatten sind, deren Permeatauslass der Wasserauslass ist. Dabei sind die Membranfilterplatten parallel oder im Wesentlichen parallel zueinander oder im Wesentlichen parallel zur Zuströmrichtung des in das Sedimentationsbecken zuströmenden Wassers und vertikal oder im Wesentlichen vertikal verlaufend angeordnet.

In hervorzuhebender Weiterbildung der Erfindung ist vorgesehen, dass die Membranfilterplatten zu Stufen bildenden Einheiten zusammengesetzt sind, wobei in einer wasserzuströmöffnungsnahen ersten Zone die Membranfilterplatten einen Plattenabstand d₁ mit d₁ ≥ 20 mm, insbesondere d₁ ≥ 30 mm, vorzugsweise 20 mm ≤ d₁ ≤ 40 mm aufweisen.

Des Weiteren sollten die Membranplatteneinheiten eine mittlere zweite Zone umfassen, wobei die Platten derart zueinander beabstandet sind, dass das Wasser diese mit einer Geschwindigkeit v mit v ≥ 0,03 m/s, insbesondere v ≥ 0,05 m/s, vorzugsweise 0,03 m/s ≤ v ≤ 0,1 m/s überströmt. Schließlich sollten die Membranfilterplatten in einer wasserzuströmungsfernliegenden dritten Zone einen Abstand d₂ mit d₂ ≥ 2mm, insbesondere d₂ ≥ 3 mm, bevorzugterweise 2mm ≤ d₂ ≤ 5 mm aufweisen.

Um gezielt die Platten von dem Wasser anströmen zu können, um also z.B. eine Cross-Flow-Filtration oder Dead-End-Filtration ohne Veränderung der Platten zu ermöglichen, ist vorgesehen, dass die Wasserzuströmöffnung höhenverstellbar ist. Hierzu kann die Wasserzuströmöffnung durch spindelgetriebene Blenden, Doppelschütze, Klappwehre o.ä. ausgebildet sein.

Durch die Anordnung der Membranplatten zueinander und deren räumliche Ausrichtung ergeben sich spezielle hydromechanische Bedingungen, die je nach räumlicher Lage verschiedenartig, jedoch für jeden der involvierten Teilprozesse optimal sind. Dabei finden folgende Belange Berücksichtigung:
- Die Hydrodynamik des MPE-Abscheiders bzw. die aus diesen bestehenden Einheiten beinhaltet eine hydrodynamisch gesteuerte Trennung zwischen Sedimentation und Membranfiltration.
- Die Hydromechanik des MPE-Abscheiders ermöglicht einen idealen Übergang von der Flockensedimentation in die Flockeneindickung.
- Die Hydromechanik des MPE-Abscheiders gewährleistet eine hydrodynamisch ungestörte statische Eindickung.
- Die Hydromechanik des MPE-Abscheiders ist so ausgerichtet, dass die hydrodynamischen Scherkräfte an den Membranplattenoberflächen eine homogene. Deckschichtenbildung begünstigt, die sich durch eine höhere Permeabilität und bessere Entfernbarkeit auszeichnet.
- Die Hydromechanik und der MPE-Abscheider sind abgestimmt auf Zonen unterschiedlicher Mechanismen der Partikelabscheidung. Dabei sind folgende Zonen zu unterscheiden:
   Zone I: Sedimentation und Cross-Flow-Filtration;
   Zone II: Cross-Flow-Filtration;
   Zone III: Dead-End-Filtration.
- Die Hydromechanik des MPE-Abscheiders begünstigt die Membranfiltration in situ auftretender Konzentrat- und Rückspülwasserströme, indem hydrodynamische Scherkräfte in den Bereichen minimiert werden, in denen die partikelreichen Wässer filtriert werden, so dass inhomogene Deckschichten vermieden werden.

Die Hydromechanik der Membranfilterplatten kann durch folgende konstruktive Möglichkeiten bestimmt werden :
- höhenverstellbare Eintrittsöffnungen des von den Flockenstufen in das Sedimentationsbecken strömende Wasser. Dabei kann die Höhenverstellbarkeit durch spindelbetriebene Blenden- oder Doppelschütze realisiert werden.
- Membranfilterplattendichte und -dichteverteilung realisiert über den Membranfilterplattenabstand in den einzelnen Membranfilterplattenreihen.

Die Membranfilterplattendichten in den einzelnen Plattenmodulreihen sind grundsätzlich mit dem Einbau festgelegt und im Betrieb nicht mehr variabel. Die Festlegung erfolgt bei der rechnerischen Auslegung des Verfahrens unter Berücksichtigung festgelegter Randbedingungen.

Die höhenverstellbare Zuström- oder Eintrittsöffnung erlaubt eine Anpassung der hydrodynamischen Bedingungen für die lnbetriebnahme und für Optimierungen im laufenden Betrieb. Je nach Sedimentations- und Fouling-Verhalten der geflockten Füllstoffe kann eine
- reine Sedimentation/ Dead-End-Filtration,
- reine Cross-Flow-Filtration oder
- eine beliebige Kombination aus beiden Extremfällen realisiert werden.

Bei der reinen Sedimentation/Dead-End-Filtration, also einer Filtration, wobei keine erzwungene Anströmung der Membran erzeugt wird, wird der konvektive Zustrom in den MPE-Abscheider unter die Membranplatten geleitet, so dass nur der von der Membranfiltration induzierte Saugstrom als lokaler Aufstrom vorliegt. Die Membranfilterplattenmodule werden somit unterströmt und es findet unterhalb der Membranfilterplattenpakete eine beruhigte Sedimentation statt. Diese Betriebsweise empfiehlt sich bei kompakten, gut sedimentierbaren Flocken.

Bei der reinen Cross-Flow-Filtration wird der konvektive Zustrom in die Membranfilterplatteneinheit in Höhe der Membranfilterplattenpakete zugeführt, wodurch eine Zwangsführung der Strömung zwischen den Membranfilterplatten hindurch erreicht wird. Die bei der Membranfiltration an den Membranoberflächen abgeschiedenen Feststoffe werden teilweise durch ihre Schwerkraft entfernt, d. h. diese gleiten an den Plattenoberflächen ab und gelangen so in den Eindickerraum. Diese Betriebsweise empfiehlt sich bei schlecht sedimentierbaren, d. h. kleinen oder leichten Flocken bzw. bei unzureichend endstabilisierten und mäßig aggregierten Schwebstoffen.

In den meisten Fällen sind beide Flocken- und Schwebstofflconsistenzen anzutreffen. In diesem Fall ist eine Intermediate-Stellung zu wählen, wodurch eine flexible Anpassung gegeben ist.

Das erfindungsgemäße Verfahren sowie die erfindungsgemäße Wasseraufbereitungsanlage eignet sich insbesondere zur Aufbereitung von Oberflächenwasser. Auf Grund der erfindungsgemäßen Lehre kann ein farbloses und nahezu partikelfreies Wasser in einem einzigen integralen Aufbereitungsschritt gewonnen werden- Das so produzierte Wasser genügt in ästhetischer und in mikrobiologischer Hinsicht höchsten hygienischen Anforderungen der Trinkwasserversorgung. Für die industrielle Anwendung steht ein nahezu partikelfreies Prozesswasser für eine direkte Verwendung zur Verfügung. Das gewonnene Wasser kann aber auch als ideales Vorprodukt für die Reinst- oder Ultrareinstwassererzeugung dienen.

Durch die optimierte Flockung kann selbst Oberflächenwasser mit hohen Konzentrationen an Schwebstoffen und oder natürlichen Wasserinhaltsstoffen - sogenannte Humin- oder Gelbstoffe - direkt aufbereitet und der Membranfiltration zugeführt werden, ohne dass instabile Betriebsverhältnisse bei der Membranfiltration durch Verblockung in Folge von Deckschichtbildungen auftreten. Durch die Membranfiltration wird eine absolute physikalische Barriere für in Wasser suspendierten Partikel erhalten, wobei alle Partikel mit Durchmessern bis zur Trenngrenze der verwendeten Membran mit sehr hoher Sicherheit separiert werden.

Es zeigen:
- Fig. 1: eine Prinzipdarstellung einer Wasseraufbereitungsanlage,
- Fig. 2: eine Prinzipdarstellung von Meinbranfilterplatteneinheiten,
- Fig. 3: einen Doppelschütz,
- Fig. 4: ein Klappwehr,
- Fig. 5: Module von Membranfilterplatten,
- Fig. 6: eine Schnittdarstellung einer Wasseraufbereitungsanlage weitgehend entsprechend Fig. 1 und
- Fig. 7: eine Draufsicht auf eine Wasseraufbereitungsanlage.

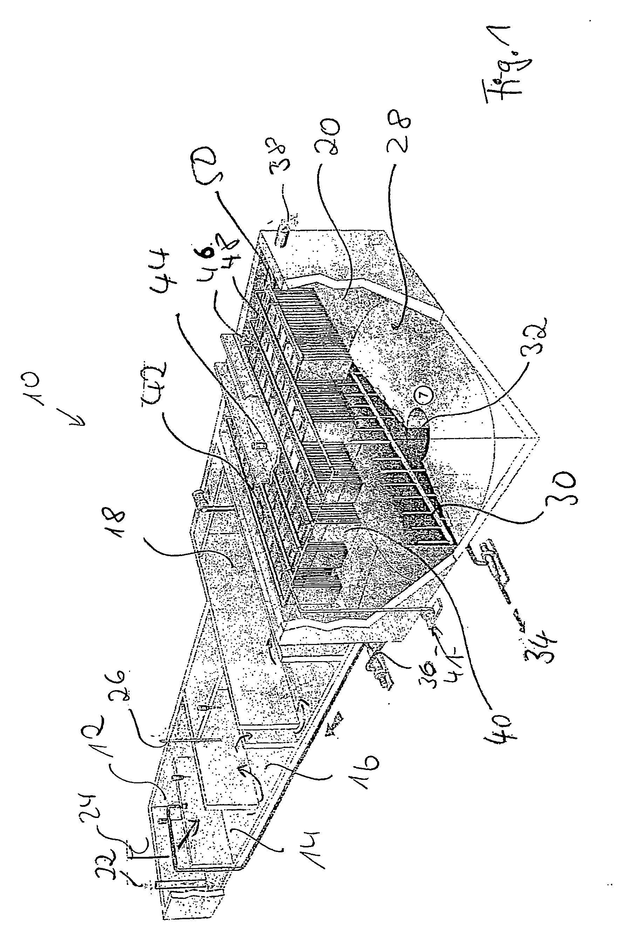

Der Fig. 1 ist rein prinzipiell eine Wasseraufbereitungsanlage 10 insbesondere bestimmt für die Grund- und Oberflächenwasserbehandlung zur Trink- und Brauchwasseraufbereitung zu entnehmen. Die Anlage 10 umfaßt im Ausführungsbeispiel vier Flockungsstufen 12, 14, 16, 18 sowie ein Sedimentationsbecken 20. Über einen Zulauf 22 wird der ersten Flockungsstufe 12 zu behandelndes Wasser zugeführt. In der ersten Flockungsstufe 12 mündet des Weiteren eine Leitung 24, über die Flockungsmittel aufgegeben wird.

Im Ausführungsbeispiel wird des Weiteren der dritten Flockungsstufe 16 über eine Leitung 26 ein Flockenhilfsmittel zugeleitet. Die letzte Flockungsstufe 18 selbst ist eine Flockenreifekammer, die über schlitzförmige und höhenverstellbare Zuströmöffnungen mit dem Sedimentationsbecken 20 verbunden ist, wobei sich die Zuströmöffnungen über die gesamte oder nahezu gesamte Breite des Sedimentationsbereiches 20 erstrekken.

Das Sedimentationsbecken 20 weist bodenseitig einen Eindickraum 28 auf, in dem ein Eindicker 30 drehbar angeordnet ist, um Schlamm einem Schlammtrichter 32 zuzuführen, aus dem über eine Leitung 34 Überschussschlamm abgezogen wird.

Für die Kontaktflockung erforderlicher hochreaktiver Kontaktschlamm wird aus definierter Höhe des Eindickraums 28 über eine Leitung 36 einer Flockungsstufe zugeführt, im Ausführungsbeispiel der Flockungsstufe 14.

Von dem Sedimentationsbecken 20 geht des Weiteren ein Saugrohr 38 aus, das mit Permeatauslässen von Membranfilterplatten 40 verbunden ist, die ihrerseits in Reihen 42, 44, 46, 48, 50 angeordnet sind. Das Permeat weist dabei partikelfreies Wasser auf, so dass das über die Saugleitung 38 entnommene Wasser einer weiteren Behandlung zur Partikelentfernung nicht unterzogen werden darf.

Um die Membranfilterplatten 40 zu spülen, ist des Weiteren eine Leitung 41 vorgesehen, über die Rückspülwasser in die Membranen 40 eingeleitet wird. Bei der Membranrückspülung abgelöste Deckschichten werden dabei in situ entsorgt, da die Sedimentation und Eindickung innerhalb desselben Prozesses über den Überschussschlamm dem System entzogen werden können.

Wie aus der Prinzipdarstellung der Fig. 1 ersichtlich ist, sind die Membranplatten 40 parallel zueinander und vertikal verlaufend angeordnet und sind außerdem parallel zur Strömungsrichtung des aus der Flockenreifekammer 18 strömenden Wassers ausgerichtet.

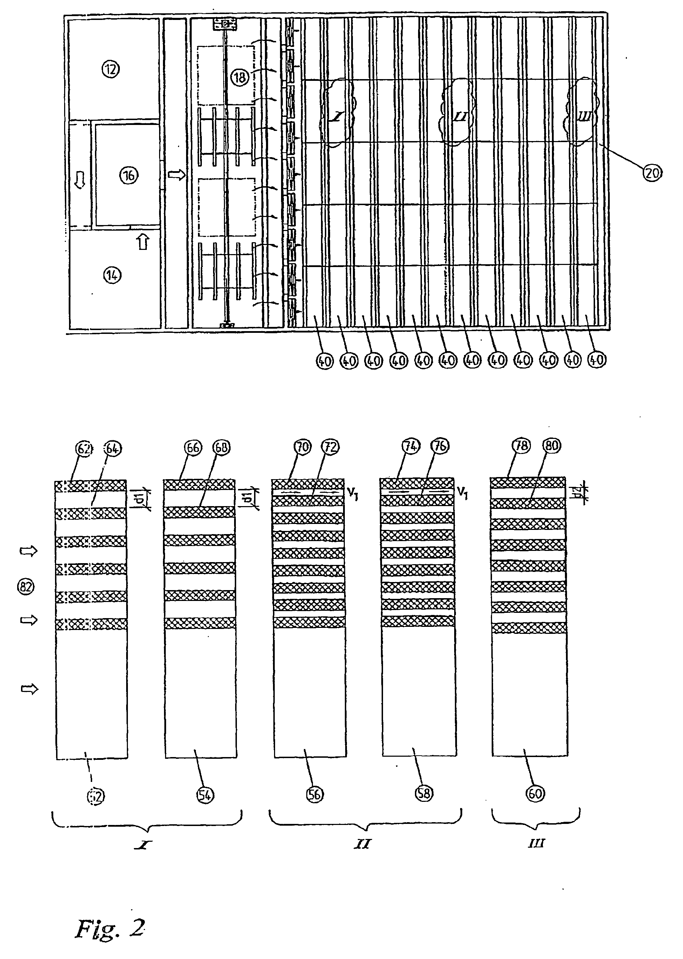

Die Membranplatten 40 sind zu Modulen zusammengesetzt, wobei die in den einzelnen Reihen 42, 44, 46, 48, 50 angeordneten Module in Bezug auf Plattenabstand derart zueinander ausgerichtet sind, dass sich unterschiedliche Mechanismen von Partikelabscheidungen ergeben. Dies soll an Hand der Fig. 2 verdeutlicht werden.

So sind in Fig. 2 insgesamt 5 Reihen 52, 54, 56, 58, 60 von Platten 62, 64, 66, 68, 70, 72, 74, 76 und 78, 80 angeordnet. Dabei weisen die Platten 62, 64, 66, 68 der ersten beiden Reihen 52, 54 (Zone I), die der Durchströmöffnung des Wassers, das in Richtung des Pfeils 82 strömt, nahe liegen, einen Abstand d₁ auf, der > 30 mm, vorzugsweise im Bereich zwischen 20 mm und 40 mm liegt. Hierdurch ergibt sich die Möglichkeit einer Sedimentation bei gleichzeitiger Cross-Flow-Filtration.

Gleichzeitig bildet sich eine Kreuzströmung zwischen der Zuströmung des Wassers (Pfeil 82) und Massenstrom der sedimentierenden Flocken (Richtung in Zeichenebene hinein) aus, wodurch sich der Vorteil ergibt, dass eine für die Membransituation unerwünschte Deckschichtbildung auf den Oberflächen der Membranfilterplatten 62, 64, 66, 68 unterdrückt wird.

In einer mittleren Zone II, die durch die Reihen 56, 58 repräsentiert wird, sind die Platten 70, 72, 74, 76 derart zueinander beabstandet, dass sich eine Überströmgeschwindigkeit v₁, mit v₁ ≥ 0,05 m/s, insbesondere im Bereich zwischen 0,03 m/s und 0,1 m/s ergibt.

Schließlich ist eine dritte Zone III vorgesehen, bei der die Membranplatten 78, 80 einen Abstand d₂ mit insbesondere d₂ ≥ 3 mm, vorzugsweise im Bereich 2 mm ≤ d₂ ≤ 5 mm aufweisen. Durch diese Abstimmung der Membranplatten zueinander stellt sich in der Zone II eine Cross-Flow-Filtration und in der Zone III eine Dead-End-Filtration ein.

Die Hydromechanik der Membranfilterplatten 62, 64, 66, 68, 70, 72, 74, 76, 78, 80 kann auch dadurch beeinflusst werden, dass die Eintrittsöffnung des zu behandelnden Wassers verändert wird. Hierzu kann vorgesehen sein, dass die Eintrittsöffnung als spindelbetriebene Blende oder Doppelschütze ausgebildet ist. Andere Möglichkeiten sind gleichfalls möglich.

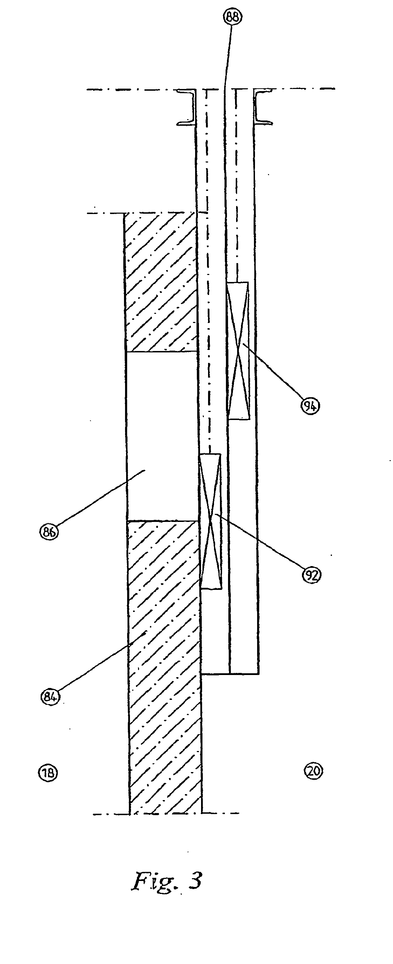

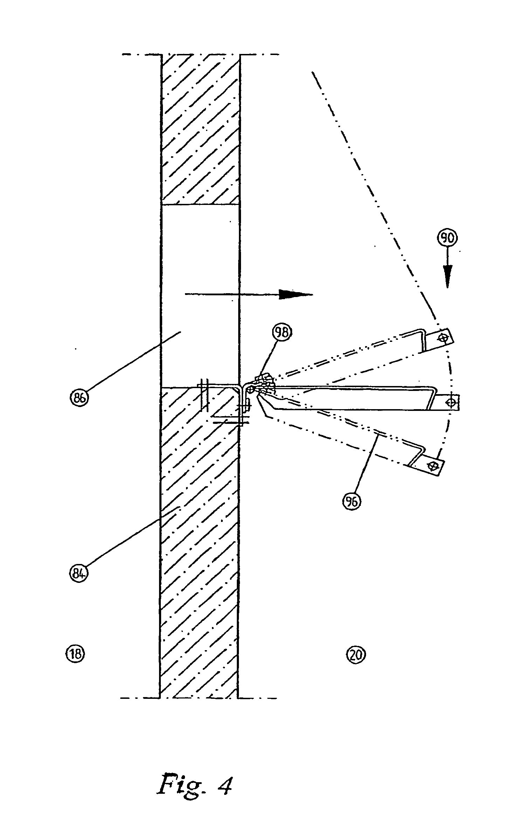

So ist z. B. in den Fig. 3 und 4 ein Ausschnitt einer das Sedimentationsbecken 20 gegenüber der vorgeschalteten Flockungsstufe 18 bzw. Flockenreifekammer trennenden Wand 84 mit Eintrittsöffnung 86 dargestellt, deren Querschnitt durch Doppelschütze 88 (Fig. 3) oder durch ein Klappwehr 90 (Fig. 4) im gewünschten Umfang einstellbar ist.

So besteht der Doppelschütz 88 aus zwei plattenförmigen Verschlusselementen 92, 94, die derart zueinander und höhenverstellbar sind, dass die Öffnung im gewünschten Umfang querschnittsmäßig verschließbar ist.

Bei dem Klappwehr 90 ist ein Verschlusselement 96 um eine Achse 98 verschwenkbar, um so das Verschlusselement 96 in eine gewünschte Stellung anheben und den Querschnitt der Öffnung 86 verändern zu können.

Durch die Einstellbarkeit der Eintrittsöffnung kann eine reine Sedimentation/Dead-End-Filtration, eine reine Cross-Flow-Filtration oder eine beliebige Kombination dieser realisiert werden. Bei der reinen Sedimentation/Dead-End-Filtration wird der konvektive Zustrom in die Reihen der Membranfilterplatten unter diesen geleitet, so dass nur der von der Membranfiltration induzierte Saugstrom als lokaler Aufstrom vorliegt. Die Membranplattenmodule werden somit unterströmt und unterhalb der Plattenpakete findet eine beruhigte Sedimentation statt.

Wird dagegen eine Cross-Flow-Filtration gewünscht, wird der konvektive Zustrom des Wassers in die Plattenreihen in Höhe dieser zugeführt, wodurch eine Zwangsführung der Strömung zwischen den Membranfilterplatten bewirkt wird.

Die bei der Membranfiltration an den Membranoberflächen abgeschiedene Feststoffe werden teilweise durch ihre Schwerkraft entfernt, d. h. sie gleiten bzw. rutschen an den Plattenoberflächen ab und gelangen so in den Eindickraum 28.

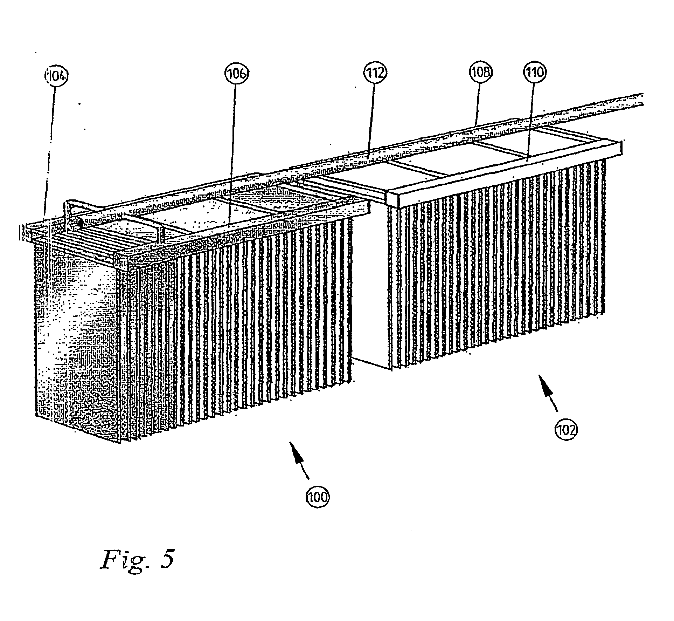

Der Fig. 5 sind rein prinzipiell zwei Membranfilterplattenmodule 100, 102 zu entnehmen, die zusammengeschaltet sind und eine Reihe 52, 54, 56, 58, 60 oder einen Abschnitt einer Reihe der Zonen I, II oder III bilden können. Die einzelnen Module 100, 102 weisen als Halterungen dienende Vierkantrohre 104, 106, 108, 110 auf, die mit den Permeatseiten der Membranfilterplatten verbunden sind. Die Vierkantrohre 104, 106, 108, 110 sind ihrerseits mit einem Saugrohr 112 verbunden, dass zu dem Saugrohranschluss 38 führt.

Bei den Membranfilterplatten kann es sich um Ultrafiltrationsmembranen handeln, die folgende Eigenschaften aufweisen.

| | |
|---|---|
| Membranwerkstoff: | Polyethersulfon |
| Chlorbeständigkeit bis: | 1000 ppm |
| Gesamtbeständigkeit gegen Chlor: | 200.000 ppm |
| H₂O₂-Beständigkeit bis: | 1000 ppm |
| Gesamtbeständigkeit gegen H₂O₂: | 200.000 ppmh |
| Innerer Membrandurchmesser: | ca. 0,8 mm |
| Trenngrenze: | 100.000 g/mol |
| Trübung Permeat: | < 0,02 FNU |
| Mernbranplattengröße: | H x B = ca. 1.000 mm x ca. 400 mm |
| Membranplattendicke: | ca. 3-4 mm |
| Membranmodullänge: | ca. 1.500 mm |
| Material Gehäuse: | PVC |
| Membransystem: | Kapillarrohrverbundplatte |
| Innendurchmesser Einzelkapillare: | ca. 0,8 mm - ca. 1,5 mm |
| Material der Kapillaren: | Polyethersulfon |
| Trenngrenze (Molecular Weight Cut-Off): | 100-150 kD |
| Zulässiger Temperaturbereich: | 0 - 40 °C |
| Zulässiger pH-Bereich (Betrieb): | 3 - 10 |
| Zulässiger pH-Bereich (Reinigung): | 1 - 13 |
| Transmembraner Druck (Filtration): | 0,2 - 1 bar |
| Transmembraner Druck (maximal) | 2,5 bar |
| maximaler Betriebsdruck: | 5 bar |
| Flächenbelastung (Filtration): | 50 - 120 l/m²/h |
| Flächenbelastung (Rückspülung): | 200 - 300 l/m²/h. |

Des Weiteren ist zu der Prinzipdarstellung der Fig. 1 anzumerken, dass von dem Sedimentationsbecken 20, und zwar im Zwischenraum zwischen der Stufe III der Membranfilterplatten und der Stimwandung, eine Leitung ausgeht, die zu dem ersten Flotationsbecken 12 führt, um Überstandswasser abziehen zu können. Durch das Abziehen von Überstandswasser im Bereich der Dead-End-Zone aus dem Sedimentationsbecken 20 kann einer möglicherweise langfristig stattfindenden Anreicherung nicht sedimentierbarer Partikel entgegengewirkt werden. Das Überstandswasser aus der oberen Beckenzone der Dead-End-Filtration wird in den Zulauf der Anlage, also in das erste Flotationsbekken 12 rückgeführt, um die angereicherten Partikel einer Mehrkammerflockung zu unterziehen. Der Überstandswasserabzug erfolgt vorzugsweise zeitgetaktet oder prozesskontrolliert. Dabei sollte der Überstandswasserstrom kleiner als 1 % vom Zulaufstrom sein.

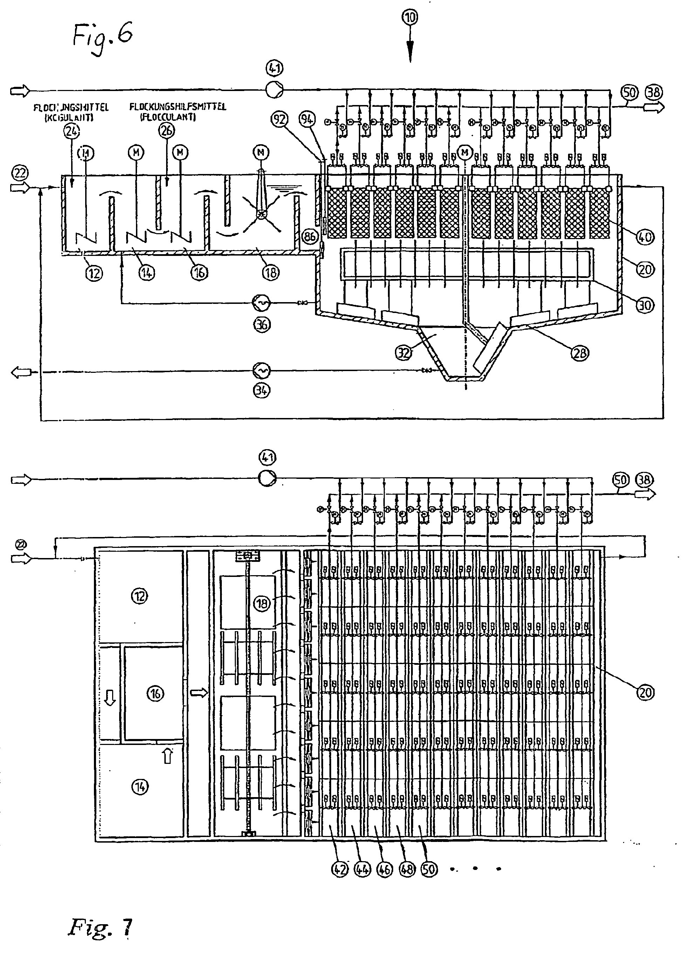

Den Fig. 6 und 7 sind Prinzipdarstellungen in Schnittdarstellung bzw. Draufsicht von Wasseraufbereitungsanlagen zu entnehmen, die prinzipiell denen der Fig. 1 entsprechen, so dass für gleiche Elemente gleiche Bezugszeichen gewählt sind. Dabei sind gemäß Fig. 6 die Flockungsbecken 12, 14, 16, 18 in Reihe angeordnet. Nach dem Ausführungsbeispiel der Fig. 7 sind die Flockungsbecken 12, 14, 16, 18 zum Teil nebeneinander angeordnet, werden jedoch entsprechend der den Fig. 1 und 6 zu entnehmenden Reihenfolge durchströmt. Ansonsten sind die Figuren selbsterklärend.

## Patentansprüche

1. Verfahren zur Wasseraufbereitung, insbesondere von Grund- und Oberflächenwasser, durch in einer oder mehreren Flockungsstufen (12, 14, 16, 18) durchgeführten Flockung oder Kontaktflockung sowie in einer nachgeschalteten in einem Sedimentationsbecken (20) erfolgenden Sedimentationsstufe durchgeführten Flockenseparation und Flockenschlammeindickung, wobei das Wasser in der Sedimentationsstufe entlang von Plattenelementen (62, 64, 66, 68, 70, 72, 74, 76, 78, 80) strömt, wobei als Plattenelemente Membranfilterplatten (62, 64, 66, 68, 70, 72, 74, 76, 78, 80) verwendet werden und den Permeatseiten der Membranfilterplatten Wasser entnommen wird, wobei die Membranfilterplatten parallel zueinander vertikal verlaufend und parallel zur Strömungsrichtung (82) des von vorgeordneter Flockungsstufe (18) in das Sedimentationsbecken (20) strömenden Wassers angeordnet werden, wobei die Membranfilterplatten derart in Bezug auf Plattenabstand zu voneinander abweichende Behandlungsstufen (I, II, III) bildenden Einheiten zusammengesetzt sind, dass eine Sedimentation bei gleichzeitiger Cross-Flow-Filtration und/oder eine Cross-Flow-Filtration und/oder eine Dead-End-Filtration oder eine Kombination dieser erfolgt, und/oder die zu dem Sedimentationsbecken (20) führende Wasserzuströmöffnung (86) höhenverstellbar ausgebildet ist, um gezielt die Membranfilterplatten von dem Wasser anströmen zu können, dass eine reine Sedimentation/Dead-End-Filtration, eine reine Cross-Flow-Filtration oder eine beliebige Kombination dieser realisiert werden kann.

2. Verfahren nach Anspruch 1,
**dadurch gekennzeichnet,**
**dass** die Membranfilterplatten (62, 64, 66, 68, 70, 72, 74, 76, 78, 80) derart ausgelegt werden, dass eine Mikro- oder Ultrafiltration erfolgt.

3. Verfahren nach Anspruch 1 oder 2,
**dadurch gekennzeichnet,**
**dass** den Membranfilterplatten (62, 64, 66, 68, 70, 72, 74, 76, 78, 80) entnommenes Permeat unmittelbar als Trinkwasser verwendet wird.

4. Verfahren nach Anspruch 1,
**dadurch gekennzeichnet,**
**dass** die Membranfilterplatten (62, 64, 66, 68, 70, 72, 74, 76, 78, 80) in Zonen (I, 11, 111) derart zueinander angeordnet werden, dass sich in einer wasserzuflussnahen ersten Zone (I) eine Cross-Flow-Filtration und ein Kreuzstrom zwischen zuströmendem Wasser und Massestrom sedimentierender Flocken ergibt.

5. Verfahren nach zumindest Anspruch 1,
**dadurch gekennzeichnet,**
**dass** die Membranfilteiplatten (62, 64, 66, 68, 70, 72, 74, 76, 78, 80) in Zonen (I, II, III) derart angeordnet werden, dass sich in einer mittleren zweiten Zone (II) eine Cross-Flow-Filtration ergibt.

6. Verfahren nach zumindest Anspruch 1,
**dadurch gekennzeichnet,**
**dass** die Membranfilterplatten (62, 64, 66, 68, 70, 72, 74, 76, 78, 80) in Zonen (I, II, III) derart zueinander angeordnet werden, dass sich in einer wasserzuflussfernliegenden dritten Zone (III) eine Dead-End-Filtration ergibt.

7. Verfahren nach zumindest Anspruch 1,
**dadurch gekennzeichnet,**
**dass** dem Sedimentationsbecken (20) Überstandswasser entnommen und einer Flockungsstufe, insbesondere der ersten Flockungsstufe (12) zugeführt wird.

8. Verfahren nach zumindest Anspruch 7,
**dadurch gekennzeichnet,**
**dass** der Überstandswasserabzug zeitgetaktet und/oder prozesskontrolliert durchgeführt wird, wobei insbesondere Überstandwasserabzugsmenge ≤ 2%, vorzugsweise ≤ 1% von der Flockenstufe zufließendem Zustrom ist.

9. Wasseraufbereitungsanlage (10) für insbesondere Grund- oder Oberflächenwasser, umfassend einen Wasserzulauf (22), eine oder mehrere Flockungsstufen (12, 14, 16, 18) sowie ein über eine mit dieser bzw. diesen über eine Wasserzuströmöffnung (86) verbundenes Sedimentationsbecken (20) mit im Bodenbereich verlaufendem Eindickraum (28), im Bodenbereich angeordnetem Eindicker (30), im Bodenbereich bzw. Boden vorhandener Auslassöffnung (34) zur Entnahme von Schlamm, wie zumindest einer Flockungsstufe (12) zuführbarem Kontaktschlamm und Überschussschlamm, sowie einen Wasserauslass (38), wobei in dem Sedimentationsbecken parallel zueinander verlaufende als Separator dienende Plattenelemente (62, 64, 66, 68, 70, 72, 74, 76, 78, 80) angeordnet sind, wobei die Plattenelemente Membranfilterplatten (40, 62, 64, 66, 68, 70, 72, 74, 78, 80) sind, deren Permeatauslass der Wasserauslass (38) ist, wobei die Membranfilterplatten parallel oder im Wesentlichen parallel zueinander, parallel oder im Wesentlichen parallel zur Zuströmungsrichtung (82) des in das Sedimentationsbecken (20) einströmenden Wassers und vertikal oder im Wesentlichen vertikal verlaufend angeordnet sind und wobei die Membranfilterplatten zu voneinander abweichende Behandlungsstufen bildenden Einheiten zusammengesetzt sind, wobei die Membranfilterplatten in einer wasserströmungsöffnungsnahen ersten Zone (I) einen Plattenabstand d₁ mit d₁ ≥ 20 mm aufweisen und/oder in einer mittleren zweiten Zone (II) derart zueinander beabstandet sind, dass das Wasser diese mit einer Geschwindigkeit v mit v ≥ 0,03 m/s überströmt, und/oder in einer wasserströmungsöffnungsfernliegenden dritten Zone (III) einen Abstand d₂ mit d₂ ≥ 2mm aufweisen.

10. Wasseraufbereitungsanlage nach Anspruch 9,
**dadurch gekennzeichnet,**
**dass** die Membranfilterplatten (62, 64, 66, 68) in der ersten Zone (I) einen Plattenabstand d₁ ≥ 30 mm, vorzugsweise 20 mm ≤ d₁ ≤ 40 mm aufweisen.

11. Wasseraufbereitungsanlage nach Anspruch 9,
**dadurch gekennzeichnet,**
**dass** die Membranfilterplatten (70, 72, 74, 76) in der mittleren zweiten Zone (II) derart zueinander beabstandet sind, dass das Wasser diese mit einer Geschwindigkeit v ≥ 0,05 m/s, vorzugsweise 0,03 m/s ≤ v ≤ 0,1 m/s überströmt.

12. Wasseraufbereitungsanlage nach Anspruch 9,
**dadurch gekennzeichnet,**
**dass** die in der dritten Zone (III) angeordneten Membranfilterplatten (78, 80) einen Abstand d₂ mit d₂ ≥ 3 mm, insbesondere 2 mm ≤ d₂ ≤ 5 mm aufweisen.

13. Wasseraufbereitungsanlage nach Anspruch 9,
**dadurch gekennzeichnet,**
**dass** die zu dem Sedimentationsbecken (20) führende Wasserzuströmöffnung (86) höhenverstellbar ausgebildet ist.

14. Wasseraufbereitungsanlage nach Anspruch 13,
**dadurch gekennzeichnet,**
**dass** die höhenverstellbare Wasserzuströmöffnung (86) durch spindelbetriebene Blenden oder Doppelschütze (88) ausgebildet ist.

15. Wasseraufbereitungsanlage nach Anspruch 9,
**dadurch gekennzeichnet,**
**dass** die Membranfilterplatten (40, 62, 64, 66, 68, 70, 72, 74, 76, 78, 80) in senkrecht zur Wasserzuströmrichtung (82) verlaufenden Reihen (42, 44, 46, 48, 50, 52, 54, 56, 58, 60) angeordnet sind.

16. Wasseraufbereitungsanlage nach zumindest Anspruch 9,
**dadurch gekennzeichnet,**
**dass** mehrere Membranfilterplatten (62, 64, 66, 68, 70, 72, 74, 76, 78. 80) jeweils zu Modulen (100, 102) zusammengesetzt sind.

17. Wasseraufbereitungsanlage nach zumindest Anspruch 9,
**dadurch gekennzeichnet,**
**dass** der Querschnitt der Wasserzuslrömöffnung (86) durch ein Klappwehr (90) einstellbar ist.

18. Wasseraufbereitungsanlage nach zumindest Anspruch 9,
**dadurch gekennzeichnet,**
**dass** die Wasserzuströmöffnung (86) sich über gesamte oder nahezu gesamte mit vorausgehendem Flockungsbecken gemeinsamer Wand (84) erstreckt.

## Claims

1. Method for water treatment, in particular for ground and surface water, by flocculation or contact flocculation performed in one or more flocculation stages (12, 14, 16, 18) and by floc separation and floc sludge thickening performed in a downstream sedimentation stage in a sedimentation tank (20), where the water in the sedimentation stage flows along plate elements (62, 64, 66, 68, 70, 72, 74, 76, 78, 80), where membrane filter plates (62, 64, 66, 68, 70, 72, 74, 76, 78, 80) are used as plate elements and water is taken from the permeate sides of the membrane filter plates, where the membrane filter plates are arranged vertical and parallel to one another and parallel to the flow direction of the water flowing from the upstream flocculation stage (18) into the sedimentation tank (20), and where the membrane filter plates are assembled with regard to plate spacing into units forming differing treatment stages such that sedimentation with simultaneous cross-flow filtration and/or a cross-flow filtration and/or a dead-end filtration or a combination thereof take place and/or the water inflow opening (86) leading to the sedimentation tank (20) is designed height-adjustable to allow the water to flow onto the membrane filter plates such that a pure sedimentation/dead-end filtration, a pure cross-flow filtration or any combination therefore can be achieved.

2. Method according to Claim 1,
**wherein**
the membrane filter plates (62, 64, 66, 68, 70, 72, 74, 76, 78, 80) are designed such that a micro-filtration or ultra-filtration takes place.

3. Method according to Claim 1 or 2,
**wherein**
the permeate taken from the membrane filter plates (62, 64, 66, 68, 70, 72, 74, 76, 78, 80) can be directly used as drinking water.

4. Method according to Claim 1,
**wherein**
the membrane filter plates (62, 64, 66, 68, 70, 72, 74, 76, 78, 80) are arranged in zones (I, II) relative to one another such that in a first zone (I) close to the water inflow a cross-flow filtration and a cross-flow between the inflowing water and the mass flow of sedimenting flocs result.

5. Method according to at least Claim 1,
**wherein**
the membrane filter plates (62, 64, 66, 68, 70, 72, 74, 76, 78, 80) are arranged in zones (I, II, III) such that a cross-flow filtration takes place in a middle second zone (II).

6. Method according to at least Claim 1,
**wherein**
the membrane filter plates (62, 64, 66, 68, 70, 72, 74, 76, 78, 80) are arranged in zones (I, II, III) relative to one another such that a dead-end filtration takes place in a third zone (III) distant from the water inflow.

7. Method according to at least Claim 1,
**wherein**
supernatant water is taken from the sedimentation tank (20) and supplied to a flocculation stage, in particular the first flocculation stage (12).

8. Method according to at least Claim 7,
**wherein**
the supernatant water removal is performed in time cycles and/or process-controlled, where in particular the supernatant water removal quantity is ≤ 2%, preferably ≤ 1%, of the inflow from the flocculation stage.

9. Water treatment facility (10) in particular for ground or surface water, comprising a water inlet (22), one or more flocculation stages (12, 14, 16, 18) and a sedimentation tank (20) connected thereto by a water inflow opening (86), said sedimentation tank having a thickening area (28) in the bottom area, a thickener (30) arranged in the bottom area, an outlet opening (34) provided in the bottom area or the bottom for removal of sludge, such as contact sludge and excess sludge feedable to at least one flocculation stage (12), and a water outlet (38), where plate elements (62, 64, 66, 68, 70, 72, 74, 76, 78, 80) parallel to one another and acting as a separator are arranged, where the plate elements are membrane filter plates (62, 64, 66, 68, 70, 72, 74, 76, 78, 80) whose permeate outlet is the water outlet (38), where the membrane filter plates are arranged parallel or substantially parallel to one another, parallel or substantially parallel to the inflow direction (82) of the water flowing into the sedimentation tank (20) and vertical or substantially vertical, where the membrane filter plates are assembled into units forming differing treatment stages, and where the membrane filter plates in a first zone (I) close to the water flow openings have a plate spacing d₁ of d₁ ≥ 20 mm and/or are at a distance from one another in a middle second zone (II) such that the water flows over it with a velocity v of v ≥ 0.03 m/s and/or have a spacing d₂ of d₂ ≥ 2 mm in a third zone (III) distant from the water flow opening.

10. Water treatment facility according to Claim 9,
**wherein**
the membrane filter plates (62, 64, 66, 68) in the first zone (I) have a plate spacing d₁ ≥ 30 mm, preferably d₁ ≥ 20 mm ≤ d₁ ≤ 40 mm.

11. Water treatment facility according to Claim 9,
**wherein**
the membrane filter plates (70, 72, 74, 76) in the middle second zone (II) are at a distance from one another such that the water flows over it with a velocity v of v ≥ 0.05 m/s, preferably 0.03 m/s ≤ v ≤ 0.1 m/s.

12. Water treatment facility according to Claim 9,
**wherein**
the membrane filter plates (78, 80) in the third zone (III) have a spacing d₂ ≥ 3 mm, in particular 2 mm ≤ d₂ ≤ 5 mm.

13. Water treatment facility according to Claim 9,
**wherein**
the water inflow opening (86) leading to the sedimentation tank (20) is designed height-adjustable.

14. Water treatment facility according to Claim 13,
**wherein**
the height-adjustable water inflow opening (86) is formed by spindle-operated diaphragms or a double gate (88).

15. Water treatment facility according to Claim 9,
**wherein**
the membrane filter plates (62, 64, 66, 68, 70, 72, 74, 76, 78, 80) are arranged in rows (42, 44, 46, 48, 50, 52, 54, 56, 58, 60) running vertical to the water inflow direction.

16. Water treatment facility according to at least Claim 9,
**wherein**
several membrane filter plates (62, 64, 66, 68, 70, 72, 74, 76, 78, 80) are assembled into modules (100, 102).

17. Water treatment facility according to at least Claim 9,
**wherein**
the cross-section of the water inflow opening (86) is settable by a flap gate (90).

18. Water treatment facility according to at least Claim 9,
**wherein**
the water inflow opening (86) extends over the entire or almost entire wall (84) in common with the upstream flocculation tank.

## Revendications

1. Procédé de traitement des eaux, en particulier des eaux souterraines et des eaux de surface, comprenant une floculation ou une floculation par contact effectuée dans un ou plusieurs étages de floculation (12, 14, 16, 18), ainsi qu'une séparation de flocons dans un étage de sédimentation s'effectuant en aval dans un bassin de sédimentation (20), et un épaississement de boues de flocage, selon lequel
l'eau s'écoule le long de plaques (62, 64, 66, 68, 70, 72, 74, 76, 78, 80) dans l'étage de sédimentation,
on utilise des plaques à filtres moléculaires (62, 64, 66, 68, 70, 72, 74, 76, 78, 80) et on retire de l'eau des faces de perméat des plaques à filtres moléculaires,
les plaques à filtres moléculaires sont parallèles les unes aux autres dans le sens vertical et parallèles à la direction d'écoulement (82) de l'eau depuis l'étage de floculation amont (18) dans le bassin de sédimentation (20),
les plaques à filtres moléculaires sont assemblées avec un écart tel entre les plaques pour obtenir des unités formant des étages de traitement (I, II, III) différents, que l'on a une sédimentation simultanée avec une filtration à flux croisés, et/ou une filtration à flux croisé en terminale, ou une combinaison de celles-ci, et/ou l'ouverture d'écoulement d'eau (86) conduisant vers le bassin de sédimentation (20) est réglable en hauteur pour que l'eau puisse balayer de manière ciblée les plaques à filtres moléculaires afin de pouvoir réaliser une sédimentation/filtration terminale pure, une filtration à flux croisés pure ou une combinaison quelconque de celles-ci.

2. Procédé selon la revendication 1,
**caractérisé en ce que**
les plaques à filtres moléculaires (62, 64, 66, 68, 70, 72, 74, 76, 78, 80) sont conçues pour réaliser une microfiltration ou une ultrafiltration.

3. Procédé selon la revendication 1 ou 2,
**caractérisé en ce que**
du perméat retiré des plaques à filtres moléculaires (62, 64, 66, 68, 70, 72, 74, 76, 78, 80) est directement utilisé comme eau potable.

4. Procédé selon la revendication 1,
**caractérisé en ce que**
les plaques à filtres moléculaires (62, 64, 66, 68, 70, 72, 74, 76, 78, 80) sont disposées en zones (I, II, III) les unes par rapport aux autres, de telle sorte que dans une première zone (I) proche de l'afflux d'eau on obtient une filtration à flux croisés et un flux croisé entre l'eau arrivant et le flux massique de flocons en sédimentation.

5. Procédé selon au moins la revendication 1,
**caractérisé en ce que**
les plaques à filtres moléculaires (62, 64, 66, 68, 70, 72, 74, 76, 78, 80) sont disposées en zones (I, II, III) de telle sorte que l'on obtient une filtration à flux croisés dans une deuxième zone (II) centrale.

6. Procédé selon au moins la revendication 1,
**caractérisé en ce que**
les plaques à filtres moléculaires (62, 64, 66, 68, 70, 72, 74, 76, 78, 80) sont disposées en zones (I, II, III) les unes par rapport aux autres de telle sorte que dans une troisième zone (III) éloignée de l'afflux d'eau on obtient une filtration terminale.

7. Procédé selon au moins la revendication 1,
**caractérisé en ce que**
de l'eau excédentaire est retirée du bassin de sédimentation (20) et amenée vers un étage de floculation, en particulier au premièr étage de floculation (12).

8. Procédé selon au moins la revendication 1,
**caractérisé en ce que**
le retrait d'eau excédentaire s'effectue de manière cadencée dans le temps et/ou contrôlée par process, avec notamment une quantité d'eau excédentaire de ≤ 2 %, de préférence de ≤ 1 %, comme apport venant de l'étage de floculation.

9. Installation de traitement des eaux (10), en particulier des eaux souterraines et des eaux de surface, comprenant une arrivée d'eau (22), un ou plusieurs étages de floculation (12, 14, 16, 18) ainsi qu'un bassin de sédimentation (20) relié à celui-ci ou à ceux-ci par une ouverture d'afflux d'eau (86) et muni d'une chambre d'épaississement (28) s'étendant dans la zone de fond, un épaississeur (30) disposé dans la zone de fond, une ouverture d'évacuation (34) prévue dans la zone de fond ou dans le fond pour retirer des boues telles que des boues de contact pouvant être amenées vers au moins un étage de floculation (12) ou des boues excédentaires, ainsi qu'une évacuation d'eau (38), avec dans le bassin de sédimentation des plaques (62, 64, 66, 68, 70, 72, 74, 76, 78, 80) parallèles les unes aux autres et servant de séparateur étant disposées, les plaques étant des plaques à filtres moléculaires (40, 62, 64, 66, 68, 70, 72, 74, 76, 78, 80) dont l'évacuation de perméat est l'évacuation d'eau (38), les plaques à filtres moléculaires parallèles ou pour l'essentiel parallèles étant pour l'essentiel parallèles à la direction d'écoulement (82) de l'eau arrivant dans le bassin de sédimentation (20) et s'étendant verticalement ou pour l'essentiel verticalement, et les plaques à filtres moléculaires sont assemblées pour réaliser des unités formant des étages de traitement différents, les plaques à filtres moléculaires présentant dans une première zone (I) proche de l'ouverture d'écoulement d'eau un écart entre les plaques d₁ ≥ 20 mm et/ou étant espacées les unes des autres dans une deuxième zone (II) centrale de telle sorte que l'eau les balaye à une vitesse v ≥ 0,03 m/s, et/ou présentant dans une troisième zone (III) éloignée de l'ouverture d'écoulement d'eau une distance d₂ ≥ 2 mm.

10. Installation de traitement des eaux selon la revendication 9,
**caractérisée en ce que**
les plaques à filtres moléculaires (62, 64, 66, 68) dans la première zone (I) présentent une distance entre les plaques d₁ ≥ 30 mm, de préférence de 20 mm ≤ d₁ ≤ 40 mm.

11. Installation de traitement des eaux selon la revendication 9,
**caractérisée en ce que**
les plaques à filtres moléculaires (70, 72, 74, 76) dans la deuxième zone (II) centrale sont espacées les unes des autres de manière à être submergées par l'eau à une vitesse v ≥ 0,05 m/s, de préférence de 0,03 m/s ≤ v ≤ 0,1 m/s.

12. Installation de traitement des eaux selon la revendication 9,
**caractérisée en ce que**
les plaques à filtres moléculaires (78, 80) disposées dans la troisième zone (III) présentent une distance d₂ ≥ 3 mm, en particulier de 2 mm ≤ d₂ ≤ 5 mm.

13. Installation de traitement des eaux selon la revendication 9,
**caractérisée en ce que**
l'ouverture d'afflux d'eau (86) conduisant vers le bassin de sédimentation (20) est réglable en hauteur.

14. Installation de traitement des eaux selon la revendication 13,
**caractérisée en ce que**
l'ouverture d'afflux d'eau (86) réglable en hauteur est formée par des obturateurs entraînés par broche ou par des vannes doubles (88).

15. Installation de traitement des eaux selon la revendication 9,
**caractérisée en ce que**
les plaques à filtres moléculaires (40, 62, 64, 66, 68, 70, 72, 74, 76, 78, 80) sont disposées en rangées (42, 44, 46, 48, 50, 52, 54, 56, 58, 60) perpendiculaires à la direction d'écoulement d'eau (82).

16. Installation de traitement des eaux selon au moins la revendication 9,
**caractérisée en ce que**
plusieurs plaques à filtres moléculaires (62, 64, 66, 68, 70, 72, 74, 76, 78, 80) sont assemblées pour former des modules (100, 102).

17. Installation de traitement des eaux selon au moins la revendication 9,
**caractérisée en ce que**
la section transversale de l'ouverture d'afflux d'eau (86) est réglable au moyen un barrage basculant (90).

18. Installation de traitement des eaux selon au moins la revendication 9,
**caractérisée en ce que**
l'ouverture d'afflux d'eau (86) s'étend sur la totalité ou sensiblement la totalité d'une paroi (84) commune avec le bassin de floculation situé en amont.
